# EUROPEAN PATENT SPECIFICATION

(11) **EP 1 589 257 B1**
(45) Date of publication and mention of the grant of the patent: **04.06.2008**
(21) Application number: 04425283.1
(22) Date of filing: 23.04.2004
(51) Int. Cl.: F16H 3/093

(54) **Double clutch transmission for motor vehicle**
Fahrzeuggetriebe mit doppelter Kupplung
Boite de vitesses de véhicules à embrayage double

(43) Date of publication of application: 26.10.2005
(73) Proprietor: C.R.F. SOCIETÀ CONSORTILE PER AZIONI, 10043 Orbassano (TO) (IT)
(72) Inventor: Baldascini, Filippo, 10043 Orbassano (Torino) (IT); Caenazzo, Dario, 10060 Scalenghe (Torino) (IT); Mesiti, Domenico, 10040 Leini' (Torino) (IT); Pregnolato, Gianluigi, 1-10024 Moncalieri (Torino) (IT)
(74) Representative: Quinterno, Giuseppe

(56) References cited:
- EP-A- 1 067 312
- EP-A- 1 077 336
- EP-A- 1 245 863
- EP-A- 1 544 505
- FR-A- 2 802 600
- US-A- 4 461 188
- US-A- 5 311 789

## Description

The present invention relates to a double clutch transmission for motor vehicles, with six or seven gears.

Italian patent application No. TO2001A000286 in the name of the applicant discloses a six-gear double clutch transmission for motor vehicles, which comprises:
a first and a second coaxial input shaft; a first and a second output shaft;
a first and a second friction clutch for coupling, respectively, the first and second input shafts to an engine shaft;
a first group of driving gear wheels associated with the odd gears (first, third and fifth) and with the reverse gear, carried by the first input shaft;
a second group of driving gear wheels associated with the even gears (second, fourth and sixth), carried by the second input shaft;
a plurality of driven gear wheels, each associated with a corresponding gear, carried by the output shafts; and
engagement sleeves, operable selectively to connect rotationally one of the driving wheels to the corresponding input shaft and/or one of the driven wheels to the corresponding output shaft.

A transmission of this type enables all the gear changes to be made in the so-called "power-shift" mode, in other words with controlled power and torque transfer between the two friction clutches.

Additionally, the unpublished Italian patent application No. -TO2003A001023 (& EP 1 544 505 A1) in the name of the applicant discloses a six-gear double clutch transmission, comprising:
a first input shaft which carries driving gear wheels of first, third, fifth and sixth gear, as well as for reverse gear;
a second input shaft, coaxial with the first, which carries driving gear wheels of second and fourth gears;
a first and a second friction clutch for coupling the first and second input shafts, respectively, to a driving shaft of the motor vehicle;
at least a first output shaft carrying a plurality of driven gear wheels, each engaging, directly or indirectly, with a corresponding driving gear wheel;
a first engagement sleeve associated with the driving or driven gear wheels of first and third gears;
a second engagement sleeve associated with the driving or driven gear wheels of second and fourth gears;
a third engagement sleeve associated with the driving or driven gear wheels of fifth and sixth gears; and
a fourth engagement sleeve associated with the driving or driven gear wheel of reverse gear.

Unlike the transmission mentioned above, this second type of transmission does not permit changing between fifth and sixth gears in "power-shift" mode.

However, the double clutch transmissions for motor vehicles proposed up to the present time have the disadvantage of having a different structure from that of ordinary single clutch transmissions, whether manual or robotized, and therefore they cannot be easily produced from the latter, but require dedicated production systems, with a consequent increase in manufacturing costs.

A six-gear double clutch transmission for motor vehicles according to the preamble of Claim 1 is known from FR 2 802 600. This known transmission comprises:
a first input shaft carrying a driving gearwheel associated to both the first gear and the reverse gear, a driving gearwheel associated to the third gear and a driving gearwheel associated to the fifth gear;
a second input shaft made in the form of a hollow shaft coaxial with the first and carrying a driving gearwheel associated to the second gear and a driving gearwheel associated to both the fourth gear and the sixth gear;
a first output shaft carrying driven gearwheels of first, third, fifth and sixth gear, as well as a first engagement sleeve for selectively engaging the first or the third gear and a second engagement sleeve for selectively engaging the fifth or the sixth gear; and
a second output shaft carrying driven gearwheels of reverse, second and fourth gear, as well as a third engagement sleeve for engaging the reverse gear and a fourth engagement sleeve for selectively engaging the second or the fourth gear.

The arrangement of the gears of this known transmission is such that a hypothetical driven gear wheel of seventh gear could not be mounted on the second output shaft so as to mesh with the driving gear wheel of fifth gear. In order to change the transmission into a seven-gear one, it would therefore be necessary to add a special driving gear wheel of seventh gear on the first input shaft, with a resulting increase in the axial size of the transmission.

An object of the invention is therefore to provide a double clutch transmission for a motor vehicle, with six or seven gears, which has a high level of synergy with the corresponding single clutch configuration, whether manual or robotized, so that the manufacturing costs can be reduced with respect to the prior art discussed above. A further object of the present invention is to provide a double clutch transmission for a motor vehicle, with six or seven gears, which has a simpler structure and smaller overall dimensions, particularly in the axial direction, with respect to the prior art.

These and other objects are achieved according to the invention by a transmission having the characteristics specified in the attached claims.

As will be made clear by the following description, a transmission according to the invention makes it possible to maximize the number of components in common with the single clutch configuration (manual or robotized) and the corresponding double clutch configuration, and to minimize the number of modifications required for changing from one version to the other. Thus the two configurations (single and double clutch) of a single transmission can be manufactured on the same production line, and therefore at lower cost.

As will be made clear by the following description, it is basically sufficient to invert the arrangement of the gear trains of second and third gears and to combine the two primary shafts in order to change from the double clutch configuration to the single clutch configuration. This is made possible by the special arrangement of the gear trains which provide the different gears, particularly by the fact that the gear train of first gear is positioned on the one side of the transmission and the gear trains of fourth and sixth gears are positioned on the other side. This configuration is possible because the direction of engagement of the odd gears is opposite that of the even gears, as in the case of manual gearboxes.

Additionally, a transmission according to the invention offers high flexibility of configuration, since it allows the production of either a very compact and inexpensive manual version or a more sophisticated double clutch version with six or seven gears.

Another advantage is given by the reduction in the overall axial dimensions and volume of the transmission. A further advantage is the minimization of the number of driving wheels, owing to the sharing of the gears. In particular, the sharing of the reverse gear enables the reverse gear shaft to be dispensed with.

Further characteristics and advantages of the invention will be made clear by the following detailed description, provided purely by way of non-limitative example, with reference to the attached drawings, in which:
Figure 1 is a view in axial section of a six-gear double clutch transmission for a motor vehicle not forming part of the present invention;
Figure 2 is a view in axial section of a manually operated six-gear single clutch transmission, also not forming part of the invention, which can be produced from the transmission of Figure 1;
Figure 3 is a view in axial section of a variant of construction of the six-gear single clutch transmission of Figure 2, also not forming part of the invention;
Figure 4 is a view in axial section of a further preferred embodiment of a seven-gear double clutch transmission for a motor vehicle according to the present invention; and
Figure 5 is a view in axial section of a six-gear double clutch transmission, which can be produced from the transmission of Figure 4.

The gear trains corresponding to the different forward gears of the transmission are indicated in the figures by Roman numerals I, II, III, IV, V, VI and VII, for the first, second, third, fourth, fifth, sixth and seventh gears respectively, while the reverse gear is indicated by the letter R.

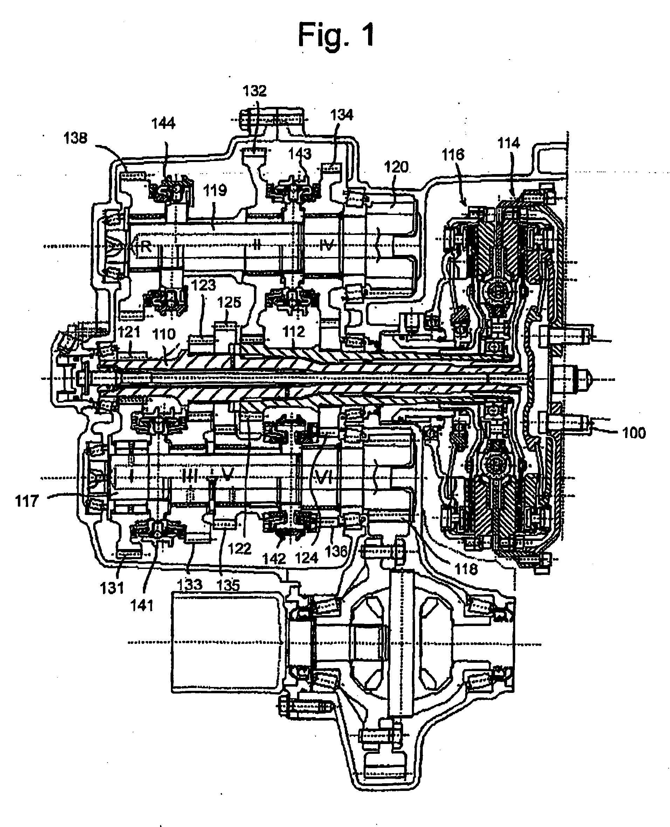

With initial reference to Figure 1, a six-gear double clutch transmission for a motor vehicle basically comprises :
a first input shaft 110;
a second input shaft 112, coaxial with the first shaft 110 and made in the form of a hollow shaft in which is inserted the portion of the first shaft 110 close to the engine of the motor vehicle (not shown);
a first, normally engaged, friction clutch, generally indicated 114, for coupling the first input shaft 110 to a driving shaft 100 (of which only an end portion is shown);
a second, normally disengaged, friction clutch, generally indicated 116, for coupling the second input shaft 112 to the driving shaft 100;
a first output shaft 117 carrying a final reduction pinion 118; and
a second output shaft 119 carrying a final reduction pinion 120.

The first input shaft 110 carries a driving gear wheel 121 of first gear, formed as a ring gear integral with the shaft a driving gear wheel 123 of third gear and a driving gear wheel 125 of fifth gear which are fixed rotationally to the shaft and engage with corresponding driven gear wheels 131 of first gear, 133 of third gear and 135 of fifth gear, idly mounted on the first output shaft 117. A first engagement sleeve 141, movable selectively to the left and to the right to engage the first and third gear respectively, is fitted between the two idle driven wheels 131 and 133.

The second input shaft 112 carries a driving gear wheel 122 of second gear, formed in this case as a ring gear integral with the shaft, and a driving gear wheel 124 of fourth and sixth gear, which are rotationally fixed to the shaft. The driving gear wheel or ring gear 122 engages with a driven gear wheel 132 of second gear idly mounted on the second output shaft 119. The driving wheel 124 engages both with a driven gear wheel 134 of fourth gear idly mounted on the second output shaft 119 and with a driven gear wheel 136 of sixth gear idly mounted on the first output shaft 117.

A second engagement sleeve 142, movable selectively to the left and to the right to engage the fifth and sixth gear respectively, is fitted between the two idle driven wheels 135 and 136. A third engagement sleeve 143, movable selectively to the left and to the right to engage the second and fourth gear respectively, is fitted between the two idle driven wheels 132 and 134.

The reverse gear train is obtained by using, as the driving and idle wheel respectively, the gear wheels 121 and 131 of first gear, and as the driven wheel a third wheel 138 idly mounted on the second output shaft 119 and connectable rotationally to this shaft by means of a fourth engagement sleeve 144.

As is clear from Figure 1, the gear trains of fourth and sixth gears are positioned on the side of the transmission facing the friction clutches 114 and 116, in other words facing the engine, while the gear trains of first and reverse gears are positioned on the axially opposite side.

Since the gear trains of first and reverse gears are shared, this variant of construction enables reverse gear to be obtained without the need to provide for dedicated idle wheels or idle shafts. Furthermore, since the gear trains of fourth and sixth gears are also shared, the overall axial dimensions of the transmission are reduced.

Preferably, this embodiment provides for the use of identical final reduction pinions 119 and 120, with different centre distances between the two output shafts 117 and 119 and the axis of the two input shafts 110 and 112.

The transmission described above does not permit gear changing in "power-shift" mode between the fifth and sixth gears, since the driven gear wheels 135 and 136 of fifth and sixth, both idly mounted on the first output shaft 117, can be engaged by means of the same engagement sleeve 142. However, this limitation does not adversely affect driving comfort, since the "jerk" occurring in the vehicle on changing between the two highest gears is contained and therefore scarcely noticeable by the driver.

The two friction clutches 114 and 116 are preferably of the dry type, in order to maximize the transmission efficiency. Additionally, due to the use of a normally engaged friction clutch for the input shaft carrying the driving wheels of first and reverse gears it is possible to dispense with the parking device, by contrast with a solution in which both of the friction clutches are normally disengaged. Since the other friction clutch is normally disengaged, problems (breakage of the gearbox and/or hazards to the user) are also avoided which might arise in case of a failure (electrical, electronic and/or hydraulic fault) in the course of a gear change which requires the simultaneous engagement of the two gears, without the need to adopt an appropriate safety system, which is rather necessary in transmissions in which both of the friction clutches are of the normally engaged type.

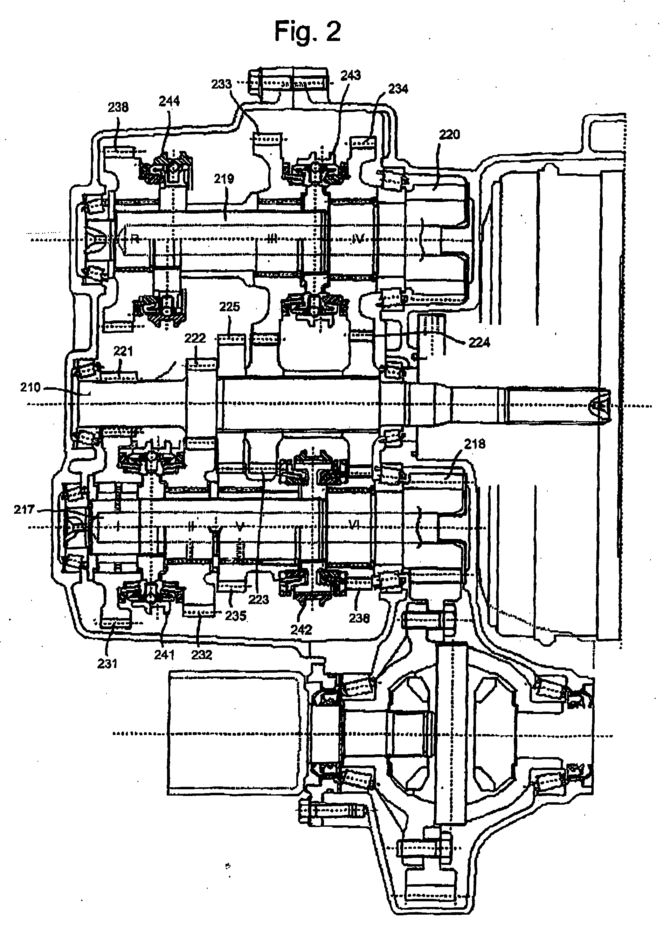

The transmission architecture described above has the advantage that it can be produced easily from a six-gear single clutch transmission, whether manually operated or robotically operated. Such a single clutch transmission, in the manually operated version, is shown in Figure 2, in which parts and elements identical or corresponding to those of Figure 1 have been assigned the same reference numbers, increased by 100.

As shown clearly by a comparison between Figures 1 and 2, the double clutch transmission of Figure 1 can be produced from the single clutch transmission of Figure 2 simply by replacing the single input shaft with the two input shafts and by inverting the order of the gear trains of second and third gears. Conversely, the single clutch transmission of Figure 2 can be produced from the double clutch transmission of Figure 1 simply by combining the two input shafts and inverting the order of the gear trains of second and third gears.

In this embodiment also, the gear trains of fourth and sixth gears share the driving wheel, indicated 224, and are positioned on the side of the transmission facing the engine. Additionally, as in the transmission of Figure 1, the gear trains of first and reverse gears share the driving wheel, indicated 221, and are positioned on the opposite side of the transmission.

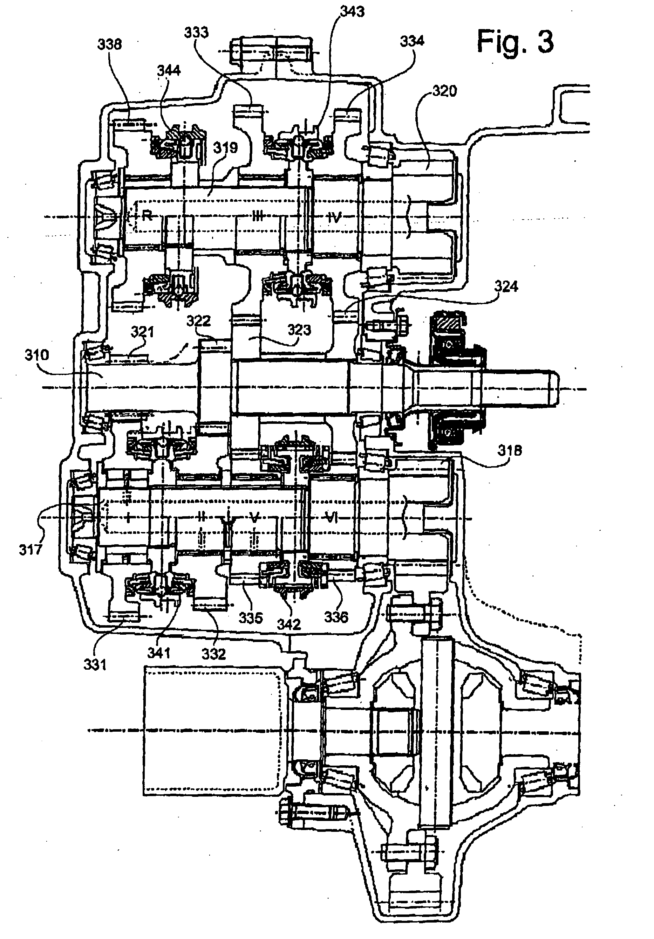

A variant of construction of the six-gear single clutch transmission of Figure 2 is shown in Figure 3, in which parts and elements identical or corresponding to those of Figure 2 have been assigned the same reference numbers, increased by 100.

This variant of construction differs from the embodiment of Figure 2 in that the gear trains of third and fifth gears are shared. The sharing of these two gears is made possible by the fact that the gear trains of third and fifth gears are positioned adjacently in the architecture of Figure 2. Therefore, a single driving gear wheel, indicated 323, is is provided, which is connected rotationally to the input shaft 310 and engages both with the driven gear wheel 333 of third gear, idly mounted on the second output shaft 319, and with driven gear wheel 335 of fifth gear, idly mounted on the first output shaft 317. Since these two further gears are shared, a further reduction in the overall axial dimensions of the transmission is achieved with respect to the solution of Figure 2.

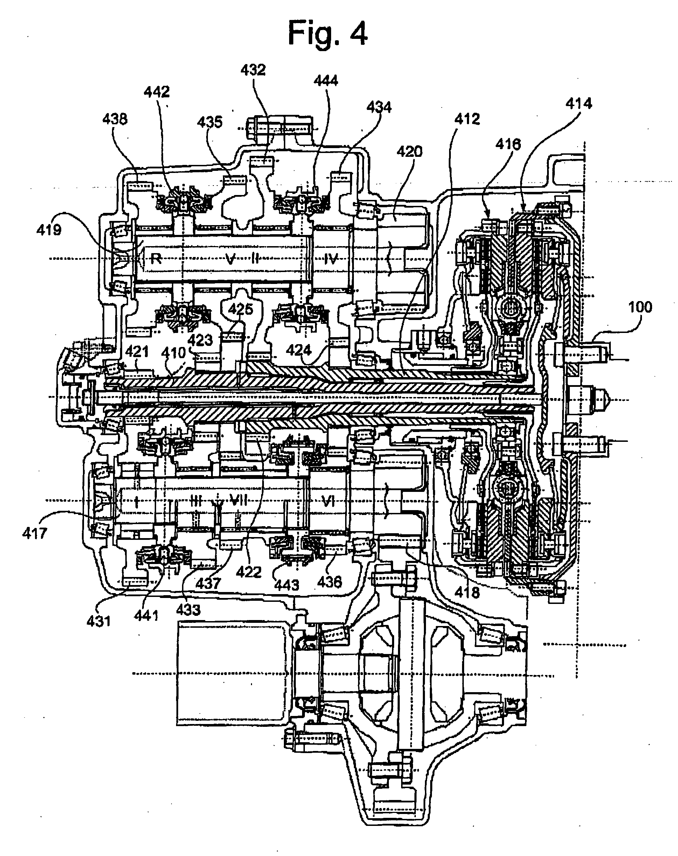

A preferred embodiment of a double clutch transmission for a motor vehicle according to the invention is shown in Figure 4, in which parts and elements identical or corresponding to those of Figure 1 have been assigned the same reference numbers, increased by 300. In this case, the transmission has seven gears, with two output shafts 417 and 419 advantageously carrying final reduction pinions 418 and 420 with identical numbers of teeth. This constructional solution provides for sharing between the first and reverse gears, between the fourth and sixth gears, and between the fifth and seventh gears.

A first input shaft 410 carries driving gear wheel 421 of first and reverse gears, formed as a ring gear integral with the shaft, a driving gear wheel 423 of third gear and a driving gear wheel 425 of fifth and seventh gears which are fixed rotationally to the shaft. The driving wheels 421 and 423 engage with corresponding driven gear wheels 431 and 433 of first and third gears idly mounted on the first output shaft 417. The driving wheel 425 engages with both a driven gear wheel 435 of fifth gear idly mounted on the second output shaft 419 and with a driven gear wheel 437 of seventh gear idly mounted on the first output shaft 417.

A first engagement sleeve 441, movable selectively to the left and to the right to engage the first and third gear respectively, is fitted between the two idle driven wheels 431 and 433. The fifth gear can be engaged by moving to the right a second engagement sleeve 442, for rotationally connecting the idle wheel 435 to the second output shaft 419.

The seventh gear can be engaged by moving to the left a third engagement sleeve 443 for rotationally connecting the idle wheel 437 to the first output shaft 417.

A second input shaft 412 carries a driving gear wheel 422 of second gear, formed as a ring gear integral with the shaft, and a driving gear wheel 424 of fourth and sixth gears, which are fixed rotationally to the shaft. The driving gear wheel 422 engages with a driven gear wheel 432 of second gear idly mounted on the second output shaft 419. The driving wheel 424 engages both with a driven gear wheel 434 of fourth gear idly mounted on the second output shaft 419 and with a driven gear wheel 436 of sixth gear idly mounted on the first output shaft 417.

A fourth engagement sleeve 444, movable selectively to the left and to the right to engage the second and fourth gear respectively, is fitted between the two idle driven wheels 432 and 434. On the other hand, the sixth gear can be engaged by moving the third engagement sleeve 443 to the right in such a way as to rotationally connect the idle wheel 436 to the first output shaft 417.

The reverse gear train is obtained by using, as the driving and idle wheel respectively, the gear wheels 421 and 431, of first gear and as the driven wheel a third wheel 438 idly mounted on the second output shaft 419 and connectable rotationally to this shaft by means of the second engagement sleeve 442.

In this case also, the two gear trains of fourth and sixth gears are positioned on the side of the transmission facing the engine, while the gear trains of first and reverse gears are positioned on the axially opposite side.

Since the gear trains of first and reverse gears, of fourth and sixth gears, and of fifth and seventh gears are shared, a seven-gear transmission is achieved which has overall axial dimensions substantially equal to those of the six-gear transmission of Figure 1. Another advantage of a seven-gear transmission of this type is that its total range is close to that of a continuously variable transmission (CVT), with an unchanged overall efficiency (typical of that of an ordinary discrete gearbox) and a considerable simplification as regards control system. Furthermore, since the seventh gear is operated by an input shaft (in other words the first shaft 410) associated with a normally engaged friction clutch (in other words the first clutch 414), when driving on a motorway with the seventh gear engaged there is no need to keep the associated friction clutch energized, thereby improving energy efficiency.

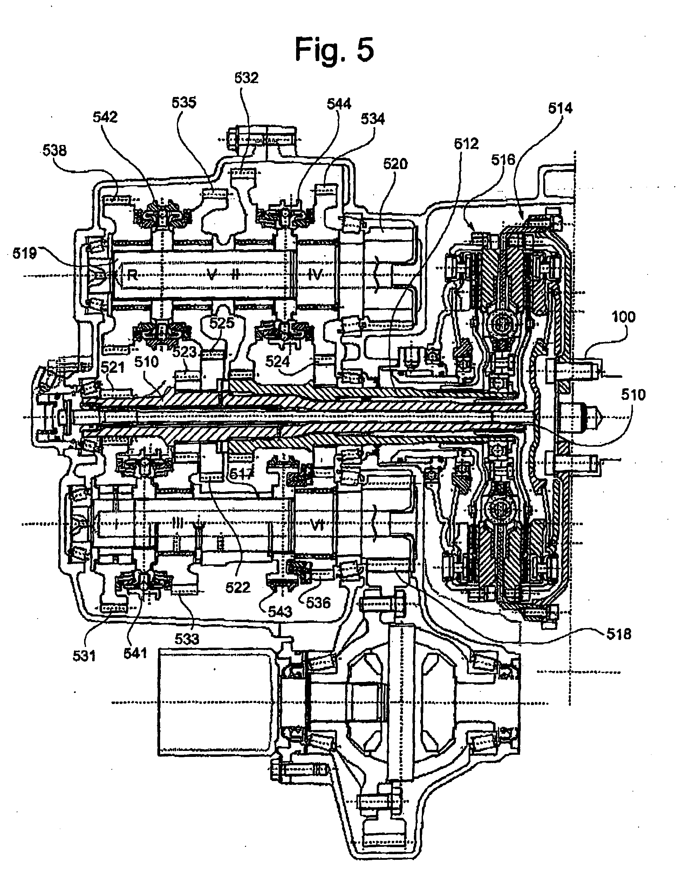

A further six-gear double clutch transmission architecture for a motor vehicle can be obtained in a very simple way and with the maximum amount of synergy from the seven-gear transmission of Figure 4. This further architecture is shown in Figure 5, in which parts and elements identical or corresponding to those of Figure 4 have been assigned the same reference numbers, increased by 100.

With respect to the embodiment of Figure 4, the driven wheel 437 of seventh gear is absent and the sixth and seventh gear engagement sleeve (here indicated 543) is of the single engagement type, rather than the double engagement type, since it only has to be used to engage the driven wheel of sixth gear (here indicated 536). A transmission is thus achieved which retains the dimensions and almost all of the components of the transmission of Figure 4 and also has the advantage of enabling all the sequential gear changes to be made in power-shift mode.

## Claims

1. A six- or seven-gear double clutch transmission for a motor vehicle comprising:
a first input shaft (410; 510) carrying driving gear wheels (421, 423, 425; 521, 523, 525) associated with the odd gears (I, III, V; I, III, V, VII) and with the reverse gear (R) ;
a second input shaft (412; 512) carrying driving gear wheels (422, 424; 522, 524) associated with the even gears (II, IV, VI);
a first and a second friction clutch (414, 416; 514, 516) associated with the first and the second input shaft (410, 412; 510, 512), respectively;
a first and a second output shaft (417, 419; 517, 519) carrying a plurality of driven gear wheels (431, 432, 433, 434, 435, 436, 437, 438; 531, 532, 533, 534, 535, 536, 538) engaging directly or indirectly with the driving gear wheels (421, 422, 423, 424, 425; 521, 522, 523, 524, 525) carried by the first and second input shafts (410, 412; 510, 512); and
a plurality of engagement sleeves (441, 442, 443, 444; 541, 542, 543, 544) operable selectively to engage a given gear;
wherein the driven gear wheel (436; 536) associated with the sixth gear (VI) and the driven gear wheel (434; 534) associated with the fourth gear (IV) engage with the same driving gear wheel (424; 524);
wherein the driving gear wheel (424; 524) of fourth and sixth gears (IV, VI), the driven gear wheel (434; 534) of fourth gear (IV) and the driven gear wheel (436; 536) of sixth gear (VI) are positioned on the side of the transmission facing the first and second friction clutches (414, 416; 514, 516), while the driving gear wheels (421; 521) and the driven gear wheel (431; 531) associated with the first gear (I) are positioned on the side of the transmission axially opposite that of the aforesaid wheels of fourth and sixth gears;
wherein the driven gear wheels (431, 433, 436; 531, 533, 536) associated with the first, third and sixth gears (I, III, VI) are arranged on the first output shaft (417; 517), while the driven gear wheels (432, 434, 438; 532, 534, 538) associated with the second, fourth and reverse gears (II, IV, R) are arranged on the second output shaft (419; 519);
**characterized in that** the driven gear wheel (435; 535) associated with the fifth gear (V) is arranged on the second output shaft (419; 519) adjacent to the driven gear wheel (438; 538) associated with the reverse gear (R).

2. Transmission according to Claim 1, wherein the gear train of reverse gear (R) comprises the driving gear wheel (421; 521) and the driven gear wheel (431; 531) associated with the first gear (I), operating as a driving wheel and as an idle wheel, respectively.

3. Transmission according to Claim 1 or Claim 2, wherein the driven gear wheels (431, 432, 433, 434, 435, 436, 437, 438; 531, 532, 533, 534, 535, 536, 538) are idly mounted on the corresponding output shafts (417, 419; 517 519).

4. Transmission according to Claim 3, wherein said plurality of engagement sleeves includes:
a first engagement sleeve (441, 541) fitted on the first output shaft (417; 517) between the two driven wheels (431, 433; 531, 533) associated with the first and third gears (I, III) for selectively engaging the first gear (I) or the third gear (III) ;
a second engagement sleeve (442; 542) fitted on the second output shaft (419; 519) between the two driven wheels (438, 435; 538, 535) associated with the reverse and fifth gears (R, V) for selectively engaging the reverse gear (R) or the fifth gear (V);
a third engagement sleeve (443, 543) fitted on the first output shaft (417; 517) for engaging the sixth gear (VI); and a fourth engagement sleeve (444; 544) fitted on the second output shaft (419; 519) between the two driven wheels (432, 434; 532, 534) associated with the second and fourth gears (II, IV) for selectively engaging the second gear (II) or the fourth gear (IV).

5. Seven-gear transmission according to any of the preceding claims, wherein the driven gear wheel (435) associated with the fifth gear (V) and the driven gear wheel (437) associated with the seventh gear (VII) engage with the same driving gear wheel (425).

6. Seven-gear transmission according to Claim 4 and Claim 5, wherein the two driven gear wheels (436, 437) associated with the sixth and the seventh gears (VI, VII) are positioned adjacent to each other on the first output shaft (417) and said third engagement sleeve (443) is interposed between these two gear wheels.

7. Transmission according to any of the preceding claims, wherein the first and second output shafts (417, 419; 517, 519) carry respective final reduction pinions (418, 420; 518, 520) with identical numbers of teeth.

8. Transmission according to any of the preceding claims, wherein the first friction clutch (414; 514) is a normally-engaged dry friction clutch, while the second friction clutch (416; 516) is a normally-disengaged dry friction clutch.

## Patentansprüche

1. Sechs- oder Siebengang-Doppelkupplungsgetriebe für ein Kraftfahrzeug, enthaltend:
eine erste Antriebswelle (410; 510), die Antriebszahnräder (421, 423, 425, 521, 523, 525) trägt, die den ungeraden Gängen (I, III, V; I, III, V, VII) und dem Rückwärtsgang (R) zugeordnet sind;
eine zweite Antriebswelle (412; 512), die Antriebszahnräder (422, 424; 522, 524) trägt, die den geraden Gängen (II, IV, VI) zugeordnet sind;
eine erste und eine zweite Reibungskupplung (414, 416; 514, 516), die der ersten bzw. der zweiten Antriebswelle (410 412; 510, 512) zugeordnet sind;
eine erste und eine zweite Abtriebswelle (417, 419; 517, 519), die eine Vielzahl von angetriebenen Zahnrädern (431, 432, 433, 434, 435, 436, 437, 438; 531, 532, 533, 534, 535, 536, 538) tragen, die direkt oder indirekt in die Antriebszahnräder (421, 422, 423, 424, 425; 521, 522, 523, 524, 525) greifen, die von der ersten und von der zweiten Antriebswelle (410, 412; 510, 512) getragen werden; und
eine Vielzahl von Einrückbuchsen (441, 442, 443, 444; 541, 542, 543, 544), die betätigt werden können, um selektiv einen gegebenen Gang einzulegen;
wobei das angetriebene Zahnrad (436; 536), das dem sechsten Gang (VI) zugeordnet ist, und das angetriebene Zahnrad (434; 534), das dem vierten Gang (IV) zugeordnet ist, mit demselben Antriebszahnrad (424; 524) in Eingriff stehen;
wobei das Antriebszahnrad (424; 524) des vierten und sechsten Gangs (IV, VI), das angetriebene Zahnrad (434; 534) des vierten Gangs (IV) und das angetriebene Zahnrad (436; 536) des sechsten Gangs (VI) auf der Seite des Getriebes angeordnet sind, die der ersten und der zweiten Reibungskupplung (414, 416; 514, 516) zugewandt ist, während die Antriebszahnräder (421; 521) und das angetriebenen Zahnrad (431; 531), das dem ersten Gang (I) zugeordnet ist, auf der Seite des Getriebes angeordnet sind, die jener der zuvor erwähnten Räder des vierten und des sechsten Gangs axial gegenüberliegt;
wobei die angetriebenen Zahnräder (431, 433, 436; 531, 533, 536), die dem ersten, dritten und sechsten Gang (I, III, VI) zugeordnet sind, auf der ersten Abtriebswelle (417; 517) angeordnet sind, während die angetriebenen Zahnräder (432, 434, 438; 532, 534, 538), die dem zweiten Gang, vierten Gang und Rückwärtsgang (II, IV, R) zugeordnet sind, auf der zweiten Abtriebswelle (419; 519) angeordnet sind;
**dadurch gekennzeichnet, dass** das angetriebene Zahnrad (435; 535), das dem fünften Gang (V) zugeordnet ist, auf der zweiten Abtriebswelle (419; 519) benachbart zum angetriebenen Zahnrad (438; 538) angeordnet ist, das dem Rückwärtsgang (R) zugeordnet ist.

2. Getriebe nach Anspruch 1, bei dem der Getriebezug des Rückwärtsgangs (R) das Antriebszahnrad (421; 521) und das angetriebene Zahnrad (431; 531) enthält, das dem ersten Gang (I) zugeordnet ist, die als Antriebsrad bzw. als Leerlaufrad arbeiten.

3. Getriebe nach Anspruch 1 oder Anspruch 2, bei dem die angetriebenen Zahnräder (431, 432, 433, 434, 435, 436, 437, 438; 531, 532, 533, 534, 535, 536, 538) leerlaufend auf den entsprechenden Abtriebswellen (417, 419; 517, 519) angebracht sind.

4. Getriebe nach Anspruch 3, bei dem die Vielzahl der Einrückbuchsen enthält:
eine erste Einrückbuchse (441, 541), die auf die erste Abtriebswelle (417; 517) zwischen die beiden angetriebenen Räder (431, 433; 531, 533) gesteckt ist, die dem ersten und dem dritten Gang (I, III) zugeordnet sind, um wahlweise den ersten Gang (I) oder den dritten Gang (III) einzulegen;
eine zweite Einrückbuchse (442; 542), die auf die zweite Abtriebswelle (419; 519) zwischen die beiden angetriebenen Räder (438, 435; 538, 535) gesteckt ist, die dem Rückwärtsgang und dem fünften Gang (R, V) zugeordnet sind, um wahlweise den Rückwärtsgang (R) oder den fünften Gang (V) einzulegen;
eine dritte Einrückbuchse (443, 543), die auf die erste Abtriebswelle (417; 517) gesteckt ist, um den sechsten Gang (VI) einzulegen; und
eine vierte Einrückbuchse (444; 544), die auf die zweite Abtriebswelle (419; 519) zwischen die beiden angetriebenen Räder (432, 434; 532, 534) gesteckt ist, die dem zweiten und dem vierten Gang (II, IV) zugeordnet sind, um wahlweise den zweiten Gang (II) oder den vierten Gang (IV) einzulegen.

5. Siebenganggetriebe nach einem der vorhergehenden Ansprüche, bei dem das angetriebene Zahnrad (435), das dem fünften Gang (V) zugeordnet ist, und das angetriebene Zahnrad (437), das dem siebten Gang (VII) zugeordnet ist, mit demselben Antriebszahnrad (425) in Eingriff stehen.

6. Siebenganggetriebe nach Anspruch 4 und Anspruch 5, bei dem die beiden angetriebenen Zahnräder (436, 437), die dem sechsten und dem siebten Gang (VI, VII) zugeordnet sind, einander benachbart auf der ersten Abtriebswelle (417) angeordnet sind und die dritte Einrückbuchse (443) zwischen diesen beiden Zahnrädern angeordnet ist.

7. Getriebe nach einem der vorhergehenden Ansprüche, bei dem die erste und die zweite Abtriebswelle (417, 419; 517, 519) entsprechende abschließende Untersetzungsritzel (418, 420; 518, 520) mit einer identischen Zahl von Zähnen tragen.

8. Getriebe nach einem der vorhergehenden Ansprüche, bei dem die erste Reibungskupplung (414; 514) eine normalerweise in Eingriff stehende Trockenreibungskupplung ist, während die zweite Reibungskupplung (416; 516) eine normalerweise gelöste Trockenreibungskupplung ist.

## Revendications

1. Transmission à embrayage double à six ou sept vitesses pour un véhicule à moteur, comportant :
un premier arbre d'entrée (410 ; 510) portant des roues dentées d'entraînement (421, 423, 425 ; 521, 523, 525) associées aux vitesses impaires (I, III, V ; I, III, V, VII) et à la marche arrière (R) ;
un deuxième arbre d'entrée (412 ; 512) portant des roues dentées d'entraînement (422, 424 ; 522, 524) associées aux vitesses paires (II, IV, VI) ;
un premier et un deuxième embrayage à friction (414, 416 ; 514, 516) associés au premier et au deuxième arbre d'entrée (410, 412 ; 510, 512) respectivement ;
un premier et un deuxième arbre de sortie (417, 419 ; 517, 519) portant une multiplicité de roues dentées entraînées (431, 432, 433, 434, 435, 436, 437, 438 ; 531, 532, 533, 534, 535, 536, 538) engageant directement ou indirectement les roues dentées d'entraînement (421, 422, 423, 424, 425 ; 521, 522, 523, 524, 525) portées par les premier et deuxième arbres d'entrée (410, 412 ; 510, 512) ; et
une multiplicité de manchons d'engagement (441, 442, 443, 444 ; 541, 542, 543, 544) pouvant fonctionner de manière sélective afin d'engager une vitesse donnée ;
la roue dentée entraînée (436 ; 536) associée à la sixième vitesse (VI) et la roue dentée entraînée (434 ; 534) associée à la quatrième vitesse (IV) engagent la même roue dentée d'entraînement (424 ; 524) ;
la roue dentée d'entraînement (424 ; 524) des quatrième et sixième vitesses (IV, VI), la roue dentée entraînée (434 ; 534) de la quatrième vitesse (IV) et la roue dentée entraînée (436 ; 536) de la sixième vitesse (VI) étant positionnées sur le côté de la transmission face aux premier et deuxième embrayages à friction (414, 416 ; 514, 516), alors que les roues dentées d'entraînement (421 ; 521) et les roues dentées entraînées (431 ; 531) associées à la première vitesse (I) sont positionnées sur le côté de la transmission axialement opposé à celui des roues mentionnées ci-dessus des quatrième et sixième vitesses ;
les roues dentées entraînées (431, 433, 436 ; 531, 533, 536) associées aux première, troisième et sixième vitesses (I, III, VI) étant disposées sur le premier arbre de sortie (417 ; 517), alors que les roues dentées entraînées (432, 434, 438 ; 532, 534, 538) associées aux deuxième et quatrième vitesses et marche arrière (II, IV, R) sont disposées sur le deuxième arbre de sortie (419 ; 519) ;
**caractérisée en ce que** la roue dentée entraînée (435 ; 535) associée à la cinquième vitesse (V) est disposée sur le deuxième arbre de sortie (419 ; 519) adjacent à la roue dentée entraînée (438 ; 538) associée à la marche arrière (R).

2. Transmission selon la revendication 1, dans laquelle le train d'engrenage de la marche arrière (R) comprend la roue dentée d'entraînement (421 ; 521) et la roue dentée entraînée (431 ; 531) associées à la première vitesse (I), fonctionnant comme roue d'entraînement et comme roue folle, respectivement.

3. Transmission selon la revendication 1 ou la revendication 2, dans laquelle les roues dentées entraînées (431, 432, 433, 434, 435, 436, 437, 438 ; 531, 532, 533, 534, 535, 535, 536, 538) sont montées de façon folle sur les arbres de sortie correspondants (417, 419 ; 517, 519).

4. Transmission selon la revendication 3, dans laquelle ladite multiplicité de manchons d'engagement comprend :
un premier manchon d'engagement (441, 541) monté sur le premier arbre de sortie (417 ; 517) entre les deux roues entraînées (431, 433 ; 531, 533) associées aux première et troisième vitesses (I, III) afin d'engager de manière sélective la première vitesse (I) ou la troisième vitesse (III) ;
un deuxième manchon d'engagement (442 ; 542) monté sur le deuxième arbre de sortie (419 ; 519) entre les deux roues entraînées (438, 435 ; 538, 535) associées à la marche arrière et à la cinquième vitesse (R, V) afin d'engager de manière sélective la marche arrière (R) ou la cinquième vitesse (V) ;
un troisième manchon d'engagement (443, 543) monté sur le premier arbre de sortie (417 ; 517) afin d'engager la sixième vitesse (VI) ; et
un quatrième manchon d'engagement (444 ; 544) monté sur le deuxième arbre de sortie (419 ; 519) entre les deux roues entraînées (432, 434 ; 532, 534) associées aux deuxième et quatrième vitesses (II, IV) afin d'engager de manière sélective la deuxième vitesse (II) ou la quatrième vitesse (IV).

5. Transmission à sept vitesses selon l'une quelconque des revendications précédentes, dans laquelle la roue dentée entraînée (435) associée à la cinquième vitesse (V) et la roue dentée entraînée (437) associée à la septième vitesse (VII) engagent la même roue dentée d'entraînement (425).

6. Transmission à sept vitesses selon la revendication 4 et la revendication 5, dans laquelle les deux roues dentées entraînées (436, 437) associées aux sixième et septième vitesses (VI, VII) sont positionnées de façon adjacente l'une à l'autre sur le premier arbre de sortie (417) et ledit troisième manchon d'engagement (443) est interposé entre ces deux roues dentées.

7. Transmission selon l'une quelconque des revendications précédentes, dans laquelle les premier et deuxième arbres de sortie (417, 419 ; 517, 519) portent des pignons de réduction finale respectifs (418, 420 ; 518, 520) avec des nombres de dents identiques.

8. Transmission selon l'une quelconque des revendications précédentes, dans laquelle le premier embrayage à friction (414 ; 514) est un embrayage à friction à sec normalement engagé, alors que le deuxième embrayage à friction (416 ; 516) est un embrayage à friction à sec normalement désengagé.
